Europäisches Patentamt

European Patent Office

Office européen des brevets

(19)

(11) EP 0 573 333 B1

(12) FASCICULE DE BREVET EUROPEEN

(45) Date de publication et mention
de la délivrance du brevet:
**18.09.1996 Bulletin 1996/38**

(51) Int Cl.6: **H02H 3/42**, H02H 7/26

(21) Numéro de dépôt: **93401360.8**

(22) Date de dépôt: **27.05.1993**

(54) **Procédé de protection sélective contre les défauts à la terre d'un réseau électrique**

Verfahren zum selektiven Schutz gegen Erdfehler in einem elektrischen Netz

Method for the selective protection of the mains against earth faults

(84) Etats contractants désignés:
**AT CH DE DK ES FR GB IT LI NL PT SE**

(30) Priorité: **03.06.1992 FR 9206736**

(43) Date de publication de la demande:
**08.12.1993 Bulletin 1993/49**

(73) Titulaire: **ELECTRICITE DE FRANCE
Service National
F-75008 Paris (FR)**

(72) Inventeurs:
• **Berthet, Luc
  F-91470 Les Molieres (FR)**
• **Bergeal, Jean
  F-91120 Palaiseau (FR)**
• **Lacroix, Bernard
  F-77100 Meaux (FR)**
• **Quinquenel, Gérard
  F-77850 Villiers sur Morin (FR)**

(74) Mandataire: **Polus, Camille et al
c/o Cabinet Lavoix
2, Place d'Estienne d'Orves
75441 Paris Cedex 09 (FR)**

(56) Documents cités:
EP-A- 0 087 700       EP-A- 0 255 659
EP-A- 0 256 341       EP-A- 0 316 204
EP-A- 0 319 151       EP-A- 0 389 749

## Description

La présente invention concerne les réseaux de distribution d'énergie électrique et, en particulier, les postes de distribution à moyenne tension. Le réseau à protéger peut présenter plusieurs types de mise à la terre ; il peut s'agir d'un réseau isolé, d'un réseau à neutre impédant à facteur de qualité très faible ou d'un réseau compensé avec mise à la terre par une bobine de compensation.

Actuellement, on utilise essentiellement deux techniques de détection des défauts à la terre qui sont fondées sur deux analyses électrotechniques différentes; ces deux techniques traitent les deux mêmes grandeurs, à savoir le courant résiduel de chaque départ et la tension résiduelle homopolaire du poste au niveau du jeu de barres.

Une première méthode, qui est la plus ancienne consiste à filtrer la composante fondamentale de ces deux signaux et en extraire la partie active et/ou réactive du courant. La notion de courant actif et de déphasage n'est valide qu'en régime permanent et cette méthode n'est donc pas bien adaptée à la détection de défauts auto-extincteurs ou de défauts permanents intermittents dont les durées d'arc sont souvent inférieures à une période du courant. Il faut noter que les signaux apparaissant pendant ces derniers défauts sont riches en composantes apériodiques ou de fréquence élevée (spectre très étendu).

Cette méthode de détection entraîne soit des détections intempestives soit des absences de détection pour des défauts réels ; ces deux phénomènes entraînent des perturbations importantes sur le réseau.

Une deuxième méthode traite également les mêmes signaux cités plus haut mais ne considère que leurs comportements transitoires. Elle évalue le sens de variation du courant homopolaire au tout début d'un défaut. Cette méthode suppose donc l'existence d'un courant transitoire et elle est particulièrement bien adaptée à la détection de défauts relativement francs.

Par contre, lors de manoeuvres ou de réenclenchements sur un défaut ou sur un départ sain, l'efficacité de cette méthode est plus discutable ; en particulier, elle risque de fournir des détections intempestives.

Par ailleurs la sensibilité de cette méthode pour des défauts très résistants dans le cas d'un réseau compensé très capacitif est également plus réduite.

La présente invention se propose de fournir un procédé de détection des défauts à la terre d'un réseau de distribution qui ne présentent pas les inconvénients précités, c'est-à-dire qui puissent détecter à la fois les défauts permanents et les défauts transitoires quel que soit le type de mise à la terre du réseau à protéger ; par ailleurs, il est souhaitable d'éviter des détections intempestives en particulier lors des manoeuvres de réenclenchement dans le cas de défauts fugitifs.

A cet effet, l'invention a pour objet un procédé de protection sélective contre les défauts à la terre d'un poste de distribution d'un réseau électrique, destiné en particulier à la protection des postes sources sur les départs à moyenne tension, caractérisé en ce que:

- on mesure en permanence, sur chaque départ, la puissance homopolaire instantanée sur une large bande de fréquences ;
- la valeur mesurée est comparée avec une première valeur de seuil et, en cas de dépassement pendant une période de temporisation réglable, on engendre une signalisation de défaut permanent ;
- la valeur mesurée est comparée à une deuxième valeur de seuil supérieure à la première et, en cas de dépassement pendant une durée égale à une période de la tension, on engendre une signalisation de défaut transitoire ;
- on mesure la tension homopolaire, on la compare à une valeur de seuil inférieure à la valeur de la tension nominale et, en cas de dépassement pendant une durée prédéterminée précédant le dépassement de la deuxième valeur de seuil précitée, les signalisations instantanées de tous les départs sont inhibées pendant un temps d'inhibition réglable.

Le fait de mesurer la puissance homopolaire instantanée pour une large bande de fréquences permet de détecter les défauts auto-extincteurs ou les défauts permanents intermittents.

L'inhibition des signalisations instantanées permet d'éviter les détections intempestives en particulier lors de manoeuvre ou de réenclenchement sur un défaut ou sur un départ sain.

Selon un mode de réalisation de l'invention, on mesure la puissance réactive résiduelle, on la compare à la puissance active résiduelle et la signalisation de défaut permanent n'est validée que si la puissance active résiduelle est supérieure à un multiple de la puissance réactive.

Cette condition supplémentaire permet d'éliminer des détections ne correspondant pas à un défaut réel.

Le fait de réaliser une telle correction permet de s'affranchir des erreurs dues aux imperfections des réducteurs de mesure.

D'autres caractéristiques et avantages de l'invention ressortiront de la description qui suit, faite en se référant aux dessins annexés sur lesquels :

- la figure 1 est un schéma bloc expliquant le fonctionnement général du procédé selon l'invention ;
- la figure 2 est un schéma bloc d'un mode de réalisation du multiplicateur ;
- les figures 3 à 6 sont des figures explicatives du fonctionnement du circuit de la figure 2 ;
- la figure 7 est un schéma d'un mode de réalisation d'un multiplicateur ;
- la figure 8 illustre un mode de contre-réaction; et
- la figure 9 illustre un deuxième mode de contre-réaction.

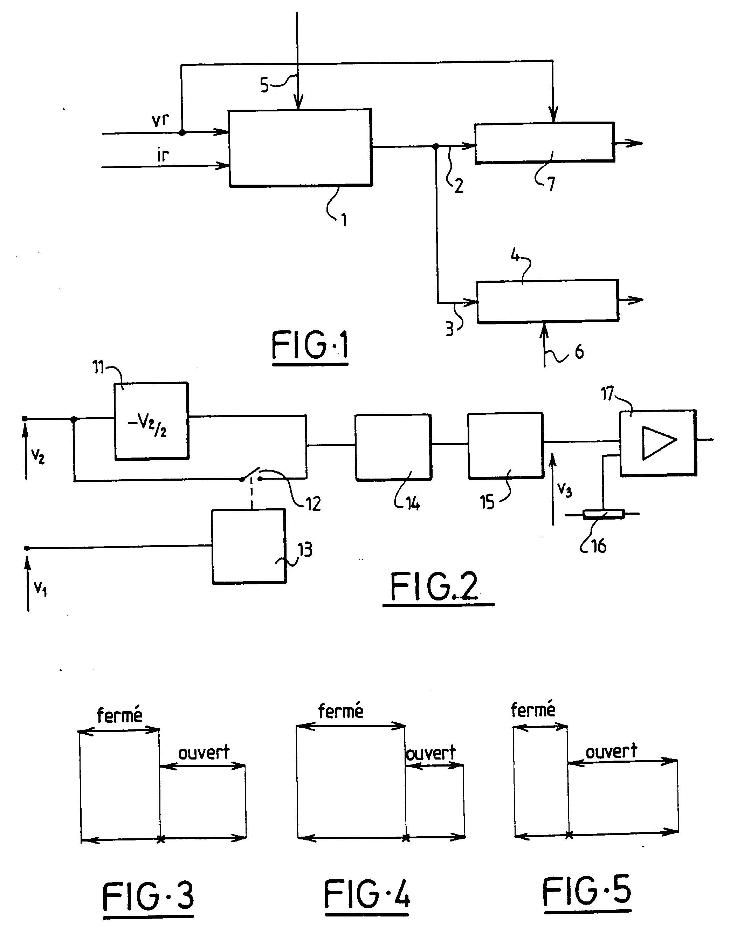

La figure 1 illustre de manière schématique le procédé selon l'invention. On utilise comme grandeurs d'entrée des grandeurs significatives de la tension homopolaire sur le jeu de barres (vr) et du courant homopolaire sur chaque départ (ir).

Ces deux grandeurs sont envoyées sur un circuit 1 qui est essentiellement constitué par un multiplicateur et qui fournit la valeur instantanée de la puissance homopolaire pour une large bande de fréquences, pour des fréquences allant par exemple jusqu'à 3 kHz.

Le circuit 1 comprend également au moins un circuit à seuil de telle sorte qu'il fournit à sa sortie au moins un signal de détection de dépassement de seuil.

Un de ces signaux de détection fournit en 2 une signalisation instantanée ; un autre signal de détection fournit en 3 une signalisation de défaut temporisée.

La signalisation instantanée 2 est envoyée sur un circuit d'inhibition 7 qui fournit à sa sortie un signal instantané de défauts. Le signal de détection 3 correspondant à un défaut permanent est envoyé dans un circuit de temporisation 4 qui fournit à sa sortie un signal de défauts temporisé.

Le circuit d'inhibition 7 est commandé par un signal fourni par le signal vr significatif de la tension homopolaire sur le jeu de barres. Le circuit multiplicateur à seuil 1 comprend une entrée d'inhibition 5 par laquelle il peut recevoir un signal externe d'inhibition de la détection de défauts. Le circuit de temporisation 4 peut présenter une temporisation variable et il comporte une entrée 6 d'inhibition de la temporisation.

Le circuit multiplicateur 1 calcule l'énergie ou la puissance homopolaire dans une largeur de bande de fréquences minimale de 25 Hz à 1 Khz ; ceci signifie que l'énergie véhiculée par les signaux de tension et de courant homopolaires dans cette bande de fréquence doit être prise en compte avec les performances indiquées ci-après.

En ce qui concerne la dynamique de fonctionnement, les relations entre la tension résiduelle Vr et le courant résiduel actif Ira sur les divers types de réseaux à considérer sont les suivantes :

$$4000 \ \Omega \ \rangle \frac{Vr}{Ira} \rangle 30 \ \Omega \text{ en 20 kv}$$

$$2000 \ \Omega \rangle \frac{vr}{ira} \rangle \ 15 \ \Omega \text{ en entrée de protection, pour toute tension MT}$$

ceci a été établi en supposant que les vecteurs de mesure des courants homopolaires ont un rapport de 100/1 et que le rapport des transformations de tension est également de 100/1.

En ce qui concerne la plage de variation fonctionnelle des courants et tensions, les relations suivantes seront respectées :

$$0 < Vr < 40 \text{ kv} \qquad 0 < vr < 200 \text{ v}$$

$$0 < Ir < 250 \text{ A} \qquad 0 < ir < 2,5 \text{ A}$$

L'utilisation de capteurs de courant homopolaire présentant un rapport de transformation différent, par exemple 50/1, pourra permettre d'utiliser ces protections sur des réseaux de type rural très peu capacitifs avec un courant résiduel actif minimal, sur défauts francs supérieur à 10 A.

En ce qui concerne la plage de précision en transitoire pour le courant résiduel, les relations à respecter sont les suivantes :

$$0 < Ir < 400 \text{ A} \qquad 0 < ir < 4 \text{ A}$$

Il y a lieu de noter que le dispositif de protection ampèremétrique classique de chaque départ prendra le relais de la protection wattmétrique selon l'invention à partir d'une valeur inférieure à 250 A et pour toutes les valeurs de courant supérieures.

La détection en régime permanent des défauts aval s'effectue de la manière suivante. Lorsque la puissance active résiduelle qui remonte du réseau vers le poste source (pour être consommée en majeure partie dans les pertes actives de la bobine ou de la résistance de point neutre) dépasse un certain seuil réglable SW de puissance active résiduelle en moyenne tension, le système de protection doit fournir l'information de détection instantanée.

La plage de réglage du seuil SW est à bas niveau, comprise entre 0,4 et 4 W ; ces valeurs correspondent, pour un réseau à 20 kW à 8 et 80 kW.

La précision du seuil de fonctionnement réel par rapport à la valeur affichée doit être inférieure à 15%.

En plus de ces conditions sur le seuil SW précité, des conditions certaines de fonctionnement et de non fonctionnement sont nécessaires. Elles font intervenir la puissance réactive. Pour que la définition de la puissance réactive résiduelle Qr ait une signification claire, on considère que l'on ne traite que des signaux à 50 Hz. Dans cette hypothèse, les conditions de non détections certaine sont les suivantes :

$$\frac{|Qr|}{Pr} > 30 \text{ ou } Pr < SW$$

et les conditions de détection certaine sont les suivantes :

$$\frac{|Qr|}{Pr} < 15 \qquad \text{et} \qquad Pr > SW$$

Le pourcentage de dégagement de la protection sur le seuil précité SW devra être de 85 à 95%.

En dehors de la zone où ce seuil SW est opérant, la montée et le dégagement de la protection doivent rester dans la zone définie par :

$$15 < \frac{|Qr|}{Pr} < 30$$

Dans ce cas, la puissance active de dégagement doit rester inférieure à 95% de la puissance active de détection.

On peut noter que s'il s'agit de réseaux mis à la terre par impédance de limitation à facteur de qualité faible, on peut admettre comme condition de détection certaine les relations suivantes :

$$\frac{|Qr|}{Pr} < 4 \qquad \text{et} \qquad PR > SW$$

En ce qui concerne la détection de défauts transitoires, qu'ils soient en amont ou en aval, les conditions sont les suivantes.

A partir d'un réseau sain, si, pendant une durée d'une période, c'est-à-dire 20 ms, on voit passer une énergie négative (ou positive) vers le réseau, dont la valeur absolue est supérieure à un seuil E, alors on doit détecter la présence d'un défaut en aval (ou en amont). Le seuil E est défini en fonction du seuil SW défini plus haut par la relation :

$$E_{(en\ joules)} = 0{,}200\ SW_{(en\ W)}$$

En ce qui concerne les temps de réponse, en régime transitoire, le temps de montée doit être tel que le fonctionnement de la protection doit se produire moins de 100 ms après le début de la période de 20 ms considérée pour l'analyse ; en ce qui concerne le régime permanent, le temps de montée doit être tel que tout signal dont la puissance dépasse le seuil SW défini plus haut pendant plus de 60 ms doit provoquer la montée de la protection au moins de 100 ms.

En ce qui concerne les temps de retombée, en ce qui concerne tout d'abord des défauts permanents à 50 Hz préalablement établis, lors de leur disparition, le temps de retombée de la protection doit être compris entre 220 et 260 ms. En ce qui concerne la détection de défauts transitoires, la protection devra rester montée pendant un temps compris entre 220 et 260 ms.

Le circuit d'inhibition fonctionne de la manière suivante. Lorsqu'un défaut à la terre se produit dans le réseau, les départs sains sont parcourus par leurs courants capacitifs. A la disparition du défaut, la capacité homopolaire des départs sains se décharge dans l'impédance de neutre avec un régime apériodique ou oscillatoire amorti selon la valeur de l'impédance de neutre.

Il est donc nécessaire d'inhiber la protection (signalisation instantanée) pendant cette remontée d'énergie du réseau vers le poste source sur l'ensemble des départs.

Si la tension homopolaire a excédé, même de façon temporaire, une valeur égale à 40% de la tension nominale pendant les 100 ms qui ont précédé, au sens strict, l'application du signal responsable de la montée de la protection, on inhibe les sorties instantanées.

De même, si pendant une période de 100 ms, on a vu passer vers le réseau une énergie supérieure au seuil E décrit plus haut, on inhibe les sorties instantanées. La durée totale de l'inhibition peut par exemple être réglée à 400 ms.

Il y a lieu de noter que, si une sortie ou une signalisation instantanée de défauts aval était déjà montée avant l'émission de ce signal d'inhibition, il ne produit pas d'inhibition. L'inhibition ne peut alors avoir lieu que si ce signal de détection instantanée de défauts aval est absent.

Comme on le voit sur la figure 1, le circuit d'inhibition n'agit pas sur les signalisations temporisées.

Le circuit de temporisation fonctionne de la manière suivante. Si le circuit 1 fournit une information de détection pendant une durée supérieure à la temporisation affichée, qui peut par exemple être comprise entre 0,3 et 3 secondes, le circuit de temporisation 4 fournit des signalisations de défaut temporisées. La précision de la valeur de la temporisation par rapport à l'affichage doit être inférieure à 20 ms ou à 5% de la valeur affichée.

Le temps de dégagement du circuit de temporisation 4 par rapport à la retombée de l'information de défaut instantané doit être inférieur à 20 ms. Le temps de récupération de la temporisation du circuit 4 doit également être inférieur à 20 ms.

Le dispositif décrit à la figure 1 comporte également des possibilités de commande d'inhibition extérieure. La première entrée d'inhibition qui agit sur l'entrée 5 du circuit 1 inhibe le fonctionnement du circuit 1, ce qui fait retomber instantanément le signal de sortie de détection. On peut également prévoir une inhibition extérieure de la temporisation qui agit sur l'entrée 6 du circuit 4. Lorsque cette entrée est activée, le temps de réponse du circuit de temporisation devient inférieur à 20 ms.

La figure 2 représente schématiquement un circuit multiplicateur qui permet de calculer dans une bande de fréquences large la valeur de la puissance homopolaire.

Les tensions V1 et V2 représentent respectivement une tension proportionnelle à la tension homopolaire sur le jeu de barres et une tension proportionnelle au courant homopolaire. La tension V2 est envoyée sur un circuit 11 qui fournit en sortie un signal égal à $-\frac{V2}{2}$.

La tension V2 est également appliquée à un commutateur analogique 12 qui est commandé par un oscillateur astable 13 qui est piloté par la tension V1. Les signaux de sortie du circuit 11 et du commutateur 12 sont envoyés sur un circuit sommateur 14 dont la sortie est filtrée par un filtre passe-bas 15.

La tension obtenue V3 est comparée à un seuil fourni par un potentiomètre 16 dans un comparateur de seuil 17.

Le commutateur 12 bat à une fréquence élevée qui est supérieure à la bande de fréquences dans laquelle on veut déterminer la puissance homopolaire. En d'autres termes, cette fréquence est grande par rapport à la fréquence la plus élevée contenue dans les signaux V1 et V2. Le battement du commutateur 12 s'effectue selon un facteur de forme qui est fonction du signal V1 par l'intermédiaire de l'oscillateur astable 13.

Le facteur de forme $F_A$ fourni par l'oscillateur astable 13 est de la forme :

$$F_A = 1/2 + 1/2\, aV1$$

dans laquelle a est un terme constant tel que la valeur absolue de aV1 est toujours comprise entre 0 et 1.

De cette manière, lorsque le signal V1 est égal à 0, le temps d'ouverture et le temps de fermeture du commutateur 12 sont égaux à 1/2 ou 50% comme représenté sur la figure 3. Lorsque le signal V1 est positif, le temps de fermeture est plus grand que le temps d'ouverture comme représenté à la figure 4 et lorsque V1 est négatif c'est le temps de fermeture qui est inférieur au temps d'ouverture.

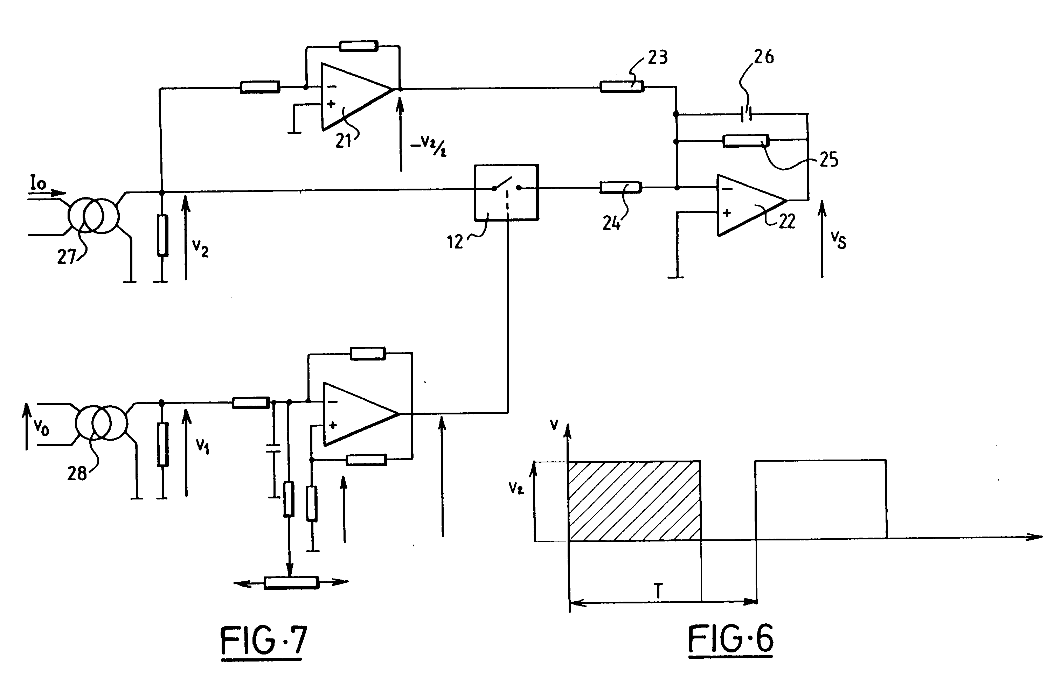

Il en résulte que le signal fourni par le commutateur 12 peut être représenté comme à la figure 6 où T est la période du commutateur 12.

Le signal issu du circuit 11, à savoir $-\frac{V2}{2}$ et le signal du commutateur 12 sont additionnés dans le sommateur 14 dont le signal de sortie est donc égal à $V_m = 1/2\, aV1V2$.

Ce dispositif est d'autant plus rapide que la fréquence du commutateur est élevée, et dans ce cas la tension de sortie $V_m$ correspond donc bien à la valeur instantanée de la puissance homopolaire.

Le circuit de filtrage 15 permet d'extraire la valeur moyenne du signal découpé fourni par le commutateur 12 de manière à supprimer la composante à fréquence double de celle du réseau qui résulte de la multiplication des deux signaux V1 et V2.

La figure 7 est un schéma plus détaillé du circuit représenté à la figure 2. Dans ce circuit, la valeur $\frac{V2}{2}$ est fournie par un amplificateur inverseur 21 et le circuit sommateur et le circuit de filtrage sont constitués par l'amplificateur opérationnel 22, les résistances 23,24 et 25 et le condensateur 26.

Du fait des imperfections des réducteurs de mesure 27 et 28 utilisés pour obtenir les signaux V1 et V2, des erreurs apparaissent et sont amplifiées dans les différents circuits en fonction de l'amplitude des grandeurs appliquées.

Pour s'affranchir de ces imprécisions, le circuit des figures 2 et 7 peut être optimisé par limitation de la zone de fonctionnement angulaire à la fréquence fondamentale au moyen d'une contre-réaction proportionnelle à la valeur absolue du courant ou à la puissance réactive.

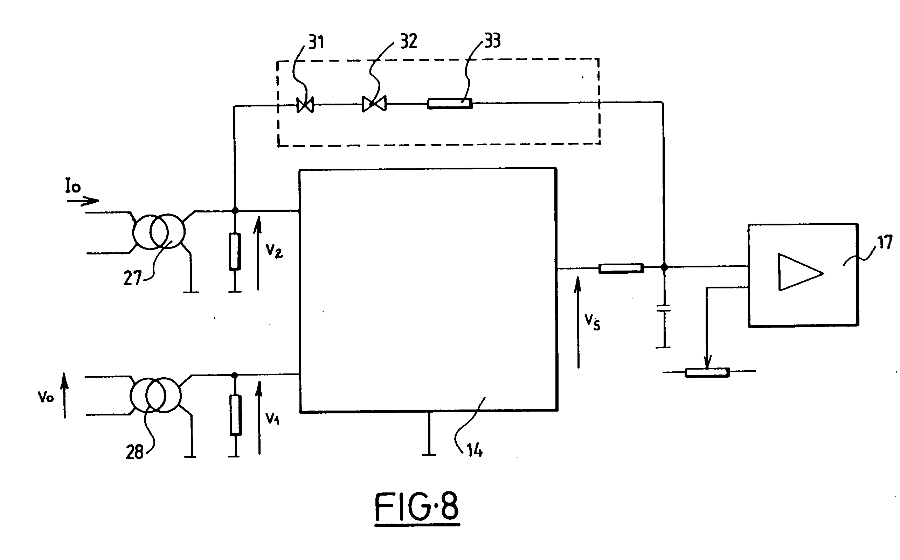

La figure 8 représente un circuit comportant une contre-réaction à partir du courant homopolaire. Dans ce cas, le circuit de contre-réaction est branché entre l'entrée et la sortie du circuit multiplicateur 14 et il comprend en série une diode 31, une diode Zener 32 et une résistance 33.

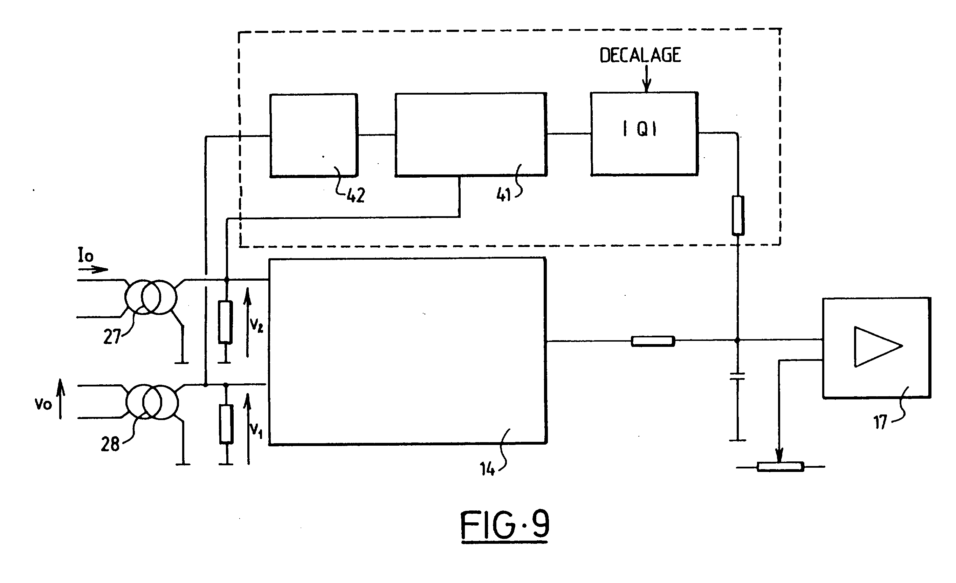

La figure 9 représente un exemple de réalisation d'une contre-réaction à partir de la puissance réactive Q. Dans ce cas, la puissance réactive est obtenue à partir d'un deuxième circuit multiplicateur 41 identique au circuit multiplicateur 14 et recevant un signal V1 déphasé de 90° par un déphaseur 42.

On voit que l'invention permet de réaliser une protection qui fonctionne de manière très fiable et pour tous les cas de mise à la terre du réseau. En particulier, le dispositif selon l'invention est également adapté à la détection de défaut sur une mise à la terre peu impédante, par exemple 40 Ohms pour un réseau à 20 kV.

En outre, le circuit multiplicateur présente l'avantage d'être de structure simple ; il peut être réalisé avec des composants de faible coût.

## Revendications

1. Procédé de protection sélective contre les défauts à la terre d'un poste de distribution d'un réseau électrique, destiné en particulier à la protection des postes sources sur les départs à moyenne tension, caractérisé en ce que :

- on mesure en permanence, sur chaque départ, la puissance homopolaire instantanée sur une large bande de fréquences ;
- la valeur mesurée est comparée avec une première valeur de seuil (SW) et, en cas de dépassement pendant une période de temporisation réglable, on engendre une signalisation de défaut permanent ;
- la valeur mesurée est comparée à une deuxième valeur de seuil (E) supérieure à la première et, en cas de dépassement pendant une durée égale à une période de la tension, on engendre une signalisation de défaut transitoire ;
- on mesure la tension homopolaire, on la compare à une valeur de seuil inférieure à la valeur de la tension nominale et, en cas de dépassement pendant une durée prédéterminée précédant le dépassement de la deuxième valeur de seuil (E) précitée, les signalisations instantanées de tous les départs sont inhibées pendant un temps d'inhibition réglable.

2. Procédé de protection sélective selon la revendication 1, caractérisé en ce que la deuxième valeur de seuil (E) est liée à la première valeur de seuil (SW) dans un rapport donné, tel que 0,2, et homogène à un temps.

3. Procédé de protection sélective selon la revendication 1, caractérisé en ce qu'on mesure la puissance réactive résiduelle, en ce qu'on la compare à la puissance active résiduelle et en ce que la signalisation de défaut permanent n'est validée que si la puissance active résiduelle est supérieure à un multiple de la puissance réactive résiduelle.

4. Procédé de protection sélective selon la revendication 3, caractérisé en ce que la valeur de la puissance active résiduelle est comparée à une valeur égale à 15 fois la valeur de la puissance réactive résiduelle.

5. Procédé de protection sélective selon la revendication 1, caractérisé en ce que le temps d'inhibition est de 400 ms.

6. Procédé de protection sélective selon la revendication 1, caractérisé en ce que la durée de temporisation est comprise entre 0,3 et 3 secondes.

7. Procédé de protection sélective selon la revendication 1, caractérisé en ce que la mesure de la puissance homopolaire instantanée est réalisée pour une bande de fréquences allant jusqu'à 3 Khz.


**Patentansprüche**

1. Verfahren zum selektiven Schutz gegen Erdfehler in einer Verteilerstation eines elektrischen Netzes, das insbesondere für den Schutz der Quellenstationen an den Mittelspannungsausspeisungen bestimmt ist, dadurch gekennzeichnet, daß:

- ständig an jeder Ausspeisung die Null-Momentanleistung auf einem breiten Frequenzband gemessen wird;
- der gemessene Wert mit einem ersten Schwellenwert (SW) verglichen wird, und bei Überschreitung während einer einstellbaren Verzögerungszeit eine ständige Fehlermeldung erzeugt wird;
- der gemessene Wert mit einem zweiten Schwellenwert (E), der größer ist als der erste, verglichen wird, und bei Überschreitung während einer Zeitdauer, die gleich einer Spannungsperiode ist, eine vorübergehende Fehlermeldung erzeugt wird;
- die Nullspannung gemessen wird, daß diese mit einem Schwellenwert verglichen wird, der kleiner als der Wert der Nominalspannung ist, und daß bei Überschreitung während einer vorbestimmten Zeitdauer, die vor der Überschreitung des vorgenannten zweiten Schwellenwertes (E) stattfindet, die Momentanmeldungen aller Ausspeisungen während einer einstellbaren Hemmungszeit gehemmt werden.

2. Verfahren zum selektiven Schutz nach Anspruch 1, dadurch gekennzeichnet, daß der zweite Schwellenwert (E) mit dem ersten Schwellenwert (SW) in einem gegebenen Verhältnis, wie beispielsweise 0,2, und zeitlich homogen verbunden ist.

3. Verfahren zum selektiven Schutz nach Anspruch 1, dadurch gekennzeichnet, daß die Restblindleistung gemessen wird, daß diese mit der Restwirkleistung verglichen wird, und daß die ständige Fehlermeldung nur dann quittiert wird, wenn die Restwirkleistung größer als ein Vielfaches der Restblindleistung ist.

EP 0 573 333 B1

**4.** Verfahren zum selektiven Schutz nach Anspruch 3, dadurch gekennzeichnet, daß der Wert der Restwirkleistung mit einem Wert gleich 15 mal den Wert der Restblindleistung verglichen wird.

**5.** Verfahren zum selektiven Schutz nach Anspruch 1, dadurch gekennzeichnet, daß die Hemmungszeit 400 ms beträgt.

**6.** Verfahren zum selektiven Schutz nach Anspruch 1, dadurch gekennzeichnet, daß die Verzögerungszeit zwischen 0,3 und 3 Sekunden liegt.

**7.** Verfahren zum selektiven Schutz nach Anspruch 1, dadurch gekennzeichnet, daß die Messung der Null-Momentanleistung bei einem Frequenzband bis zu 3 KHz durchgeführt wird.

**Claims**

**1.** A method for the selective protection against earth faults of a distribution station of an electric grid, intended, in particular, for the protection of source stations on medium voltage output lines, characterized in that:

- the instantaneous homopolar power in each output line is constantly measured over a wide frequency band;
- the measured value is compared with a first threshold value (SW) and, in case this is exceeded during an adjustable timed period, a permanent fault indication is generated;
- the measured value is compared with a second threshold value (E) higher than the first and, in the case where this is exceeded for a duration equal to one period of the voltage, a transient fault indication is generated;
- the homopolar voltage is measured; it is compared with a threshold value lower than the value of the nominal voltage and, in case this is exceeded for a predetermined period preceding the exceeding of the above mentioned second threshold value (E), the instantaneous indications from all the output lines are inhibited during an adjustable inhibition period.

**2.** A method for the selective protection according to claim 1, characterized in that the second threshold value (E) is linked to the first threshold value (SW) in a given ratio, such as 0.2, and homogeneous with one period.

**3.** A method for the selective protection according to claim 1, characterized in that the reactive residual power is measured; in that it is compared with the active residual power and in that the permanent fault indication is only validated if the active residual power exceeds a multiple of the reactive residual power.

**4.** A method for the selective protection according to claim 3, characterized in that the value of the active residual power is compared with a value equal to 15 times the value of the reactive residual power.

**5.** A method for the selective protection according to claim 1, characterized in that the inhibition period is 400 ms.

**6.** A method for the selective protection according to claim 1, characterized in that the timed period is comprised between 0.3 and 3 seconds.

**7.** A method for the selective protection according to claim 1, characterized in that the measurement of the instantaneous homopolar power is undertaken for a frequency band ranging up to 3 Khz.

FIG·1

FIG.2

FIG·3

FIG·4

FIG·5

FIG·6

FIG·7

FIG·8

## FIG·9

EP 0 573 333 B1